# FASCICULE DE BREVET EUROPEEN

(11) **EP 0 362 074 B1**
(45) Date de publication et mention de la délivrance du brevet: **12.05.1993**
(21) Numéro de dépôt: 89402683.0
(22) Date de dépôt: 29.09.1989
(51) Int. Cl.: F01D 5/34, F01D 5/28

(54) **Roue de turbine grande vitesse en matériau composite**
Schnellaufendes Turbinenrad aus Verbundwerkstoff
High-speed turbine wheel composed of a composite material

(30) Priorité: 30.09.1988 FR 8812853
(43) Date de publication de la demande: 04.04.1990
(73) Titulaire: SOCIETE EUROPEENNE DE PROPULSION, 92150 Suresnes (FR)
(72) Inventeur: Labrouche, Jean-Pierre, F-33700 Merignac (FR); Broquère, Bernard, F-33100 Bordeaux (FR); Parenteau, Jean-Marie, F-33200 Bordeaux (FR); Etienne, Jacques, F-33320 Le Taillan Medoc (FR); Lacombe, Alain, F-33600 Pessac (FR)
(74) Mandataire: Joly, Jean-Jacques

(56) Documents cités:
- EP-A- 0 176 386
- BE-A- 690 087
- DE-A- 1 426 846
- DE-A- 1 810 915
- FR-A- 2 401 888
- FR-A- 2 476 766
- GB-A- 2 117 844
- US-A- 4 354 804

## Description

### Roue de turbine grande vitesse en matériau composite

La présente invention concerne une roue de turbine en matériau composite prévue pour une utilisation à grande vitesse, notamment pour un moteur aéronautique. Par utilisation à grande vitesse, on entend ici une vitesse linéaire périphérique supérieure à 500 m/s.

Il a déjà été proposé, notamment dans le document FR-A-2 476 766, de réaliser en une seule pièce une roue de turbine en matériau composite comprenant une partie centrale, ou jante, munie d'aubes à sa périphérie. Le matériau composite est constitué par un renfort fibreux densifié par une matrice, l'orientation des fibres du renfort étant déterminée en fonction des contraintes qui s'exercent sur la roue lors de son utilisation.

Il a été aussi proposé, dans le document EP-A-0 176 386 d'utiliser un renfort fibreux constitué par deux textures hélicoïdales tissées imbriquées l'une dans l'autre, le diamètre extérieur de l'une des textures étant plus petit que celui de l'autre texture pour former une partie plus épaisse au niveau du moyeu. Chaque texture hélicoïdale a des fils circonférentiels et des fils radiaux. La densité des fils circonférentiels peut être variable le long d'un rayon de la roue,par exemple plus grande du côté du petit diamètre.

Le but de la présente invention est de fournir une roue de turbine de ce type ayant des performances nettement améliorées, tant sur le plan mécanique que sur celui de la tenue aux températures élevées et aux agressions chimiques.

Ce but est atteint du fait que le renfort fibreux est formé au moyen d'un tissu hélicoïdal avec des fibres orientées radialement et des fibres orientées circonférentiellement, dans lequel, conformément à l'invention :
- le rapport (r/c) entre le taux (r) de fibres orientées radialement et le taux (c) de fibres orientées circonférentiellement varie le long d'un rayon de la roue depuis une valeur inférieure à 1 au niveau du diamètre intérieur de la jante jusqu'à une valeur supérieure à 1 au niveau du diamètre extérieur de la jante, dans la zone d'ancrage des aubes, et décroît ensuite jusqu'à l'extrémité des aubes de sorte que la distribution des taux de fibres en direction radiale et en direction circonférentielle le long d'un rayon de la roue est fonction de la distribution des contraintes radiales et des contraintes circonférentielles, respectivement, qui s'exercent sur la roue au cours de son utilisation, et
   en ce qu'au moins une partie des fibres en direction circonférentielle dans la jante sont en un matériau résistant aux contraintes mécaniques, tandis qu'au moins une partie des fibres en direction circonférentielle dans les aubes et des fibres en direction radiale sont en un matériau résistant aux températures élevées et aux agressions chimiques, de sorte que la distribution des taux de fibres en direction radiale et en direction circonférentielle le long d'un rayon de la roue est fonction de la distribution des contraintes radiales et des contraintes circonférentielles, respectivement, qui s'exercent sur la roue au cours de son utilisation, et
- au moins une partie des fibres en direction circonférentielle dans la jante sont en un matériau résistant aux contraintes mécaniques, tel que le carbone, tandis qu'au moins une partie des fibres en direction circonférentielle dans les aubes et des fibres en direction radiale sont en un matériau résistant aux températures élevées et aux agressions chimiques, tel que le carbure de silicium.

La combinaison d'un taux de fibres évolutif à la fois en direction radiale et en direction circonférentielle en fonction des contraintes subies par la roue, et d'un choix de matériaux ayant des propriétés particulières pour les fibres dans différentes parties de la roue, permet l'obtention d'une roue de turbine capable de supporter des contraintes élevées tout en ayant une longue durée de vie même dans un milieu agressif chimiquement et thermiquement.

L'invention sera mieux comprise à la lecture de la description faite ci-après, à titre indicatif mais non limitatif, en référence aux dessins annexés sur lesquels :
- la figure 1 est une vue schématique en perspective d'une roue de turbine,
- la figure 2 est une vue schématique d'un tronçon de tissu hélicoïdal utilisé pour constituer le renfort fibreux du matériau composite constitutif d'une roue de turbine selon l'invention,
- la figure 3 illustre la variation des contraintes circonférentielles et radiales en fonction du rayon d'une roue,
- la figure 4 est une courbe illustrant de façon typique la relation entre contrainte et déformation d'un matériau composite constitué d'un renfort en fibres réfractaires et d'une matrice céramique, et
- la figure 5 illustre l'évolution du taux de fibres dans le tissu hélicoïdal en direction circonférentielle et radiale en tenant compte des contraintes dont la variation est illustrée par la figure 3.

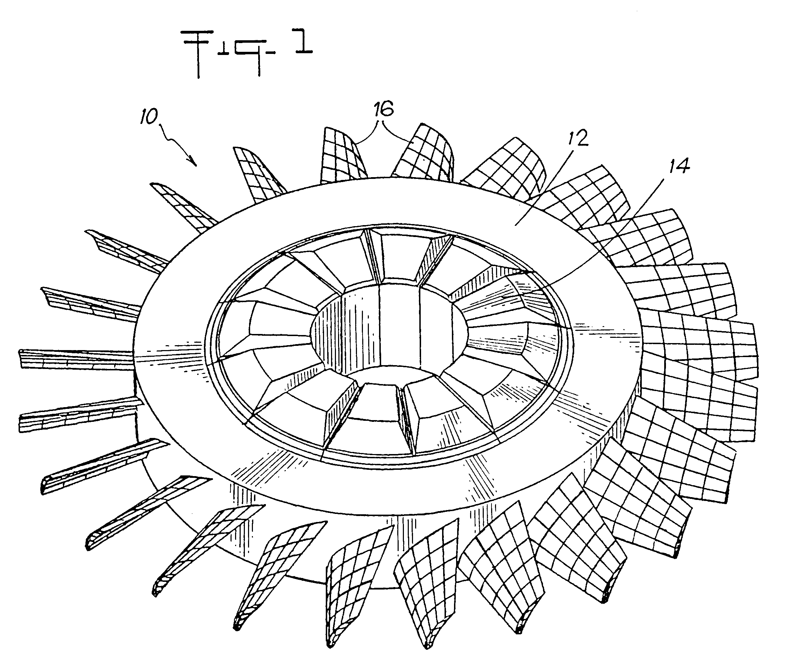

La figure 1 illustre une roue de turbine 10 comprenant, de façon classique, une jante 12 en forme de disque annulaire dont la partie centrale forme un moyeu 14, et des aubes 16 réparties à la périphérie de la jante.

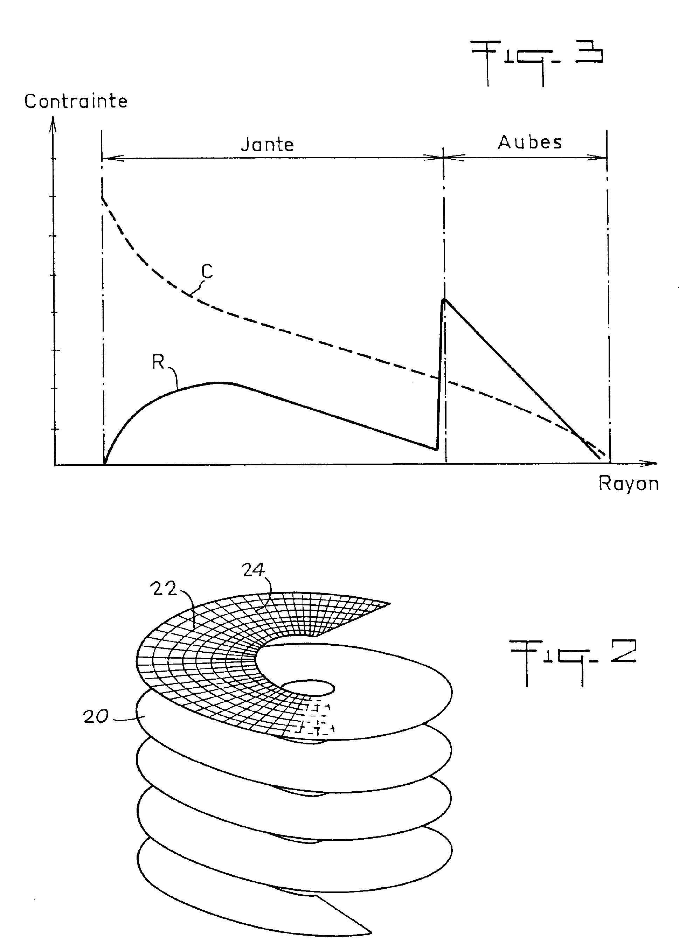

Conformément à l'invention, la roue est réalisée en une seule pièce en matériau composite dont le renfort fibreux est formé au moyen d'un tissu hélicoïdal tel qu'illustré par la figure 2.

Les tissus hélicoïdaux sont bien connus, de même que leur procédé de fabrication. Dans l'exemple illustré, le tissu 20 est formé de fils de chaîne 22 orientés en direction circonférentielle et de fils de trame 24 orientés en direction radiale. La densité des fils de chaîne d'un bord à l'autre du tissu peut être diminuée ou augmentée en écartant ou rapprochant les fils de chaîne les uns des autres. La densité des fils de trame d'un bord à l'autre du tissu, c'est-à-dire le long d'un rayon, peut également être variée en introduisant les fils de trame sur toute ou partie de la largeur de la chaîne, non nécessairement à partir d'un bord de celle-ci.

Une préforme de la roue est obtenue en serrant les unes contre les autres des spires du tissu hélicoïdal en nombre et au taux de fibres désiré correspondant à l'épaisseur souhaitée de la préforme, comme indiqué par les flèches de la figure 2. Le diamètre extérieur de la préforme est choisi supérieur à celui de la roue à réaliser, aubage compris, pour tenir compte de la réduction de dimension due à l'usinage final.

Conformément à l'invention, le taux de fibres orientées circonférentiellement et celui des fibres orientées radialement est variable en fonction du rayon pour être adapté aux contraintes que subit la roue lors de son utilisation.

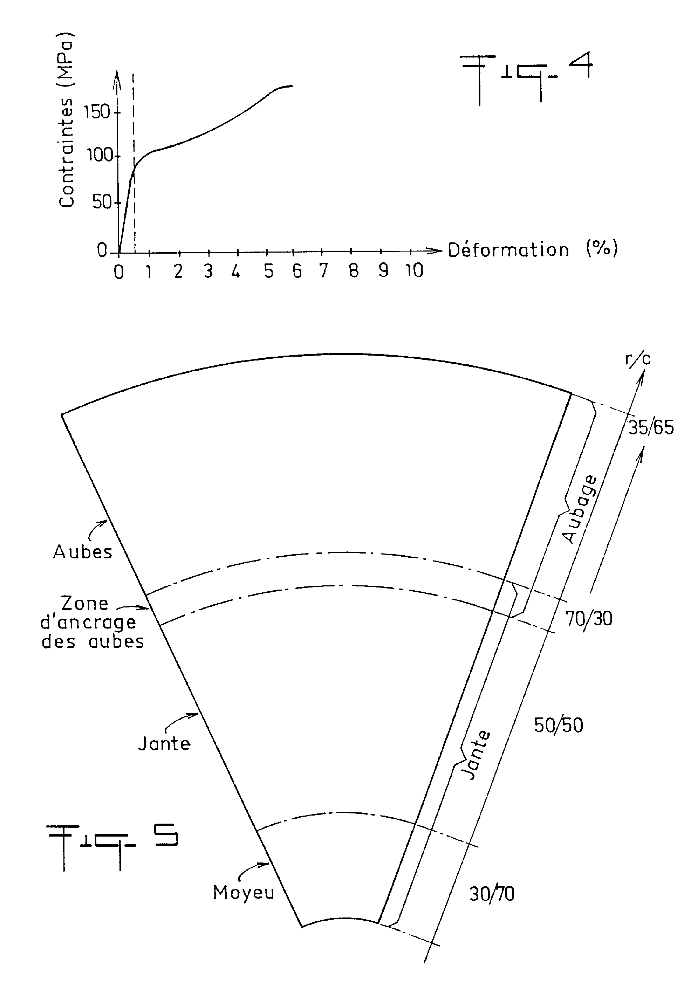

La figure 3 illustre les variations des contraintes circonférentielles et radiales dans une roue de turbine, constituée d'un matériau isotrope élastique linéaire, telle que celle illustrée par la figure 1, ayant un diamètre intérieur de 33 mm, un diamètre extérieur de 220 mm (aubage compris) et un diamètre extérieur de jante de 155 mm.

Comme le montre la courbe C de la figure 3, les contraintes circonférentielles ont une valeur qui décroît en fonction du rayon à partir du rayon intérieur de la jante, avec une décroissance plus forte dans la partie formant moyeu.

Par contre, la courbe R de la figure 3 montre que les contraintes radiales croissent depuis le rayon intérieur de la jante, dans la partie formant moyeu, pour décroître ensuite jusqu'au rayon extérieur de la jante. Un brusque et important accroissement des contraintes radiales est observé aux pieds des aubes, après quoi les contraintes radiales diminuent régulièrement jusqu'au rayon extérieur de la roue.

L'utilisation d'un matériau composite constitué d'une fibre de céramique réfractaire (telle que carbone, carbure de silicium, alumine, alumine-silice, etc ...) et d'une matrice céramique ou réfractaire telle que carbure de silicium permet de réduire de façon importante les contraintes maximales calculées dans la pièce.

En effet, comme le montre la figure 4, la courbe de résistance à la traction d'un tel matériau fait apparaître, au-delà de la phase élastique (zone A), une phase "plastique" que l'on attribue généralement à une micro-fissuration de la matrice. Un matériau composite céramique de ce type s'adapte donc à la surcontrainte locale sans rupture fragile ni propagation de rupture ultérieure à l'ensemble de la pièce. Ces matériaux permettent de réduire les contraintes circonférentielles au niveau de l'alésage de 20 à 25 % environ.

L'adaptation du taux de fibres aux valeurs des contraintes en direction circonférentielle et en direction radiale dans la préforme est réalisée en faisant évoluer les proportions relatives de fils de chaîne (fils circonférentiels) et de fils de trame (fils radiaux) entre le bord intérieur et le bord extérieur du tissu hélicoïdal (c'est-à-dire le long d'un rayon). En d'autres termes, la proportion de fils de chaîne est supérieure à celle des fils de trame dans les zones où les contraintes circonférentielles sont supérieures aux contraintes radiales, et inversement.

Sur la figure 5, qui illustre un secteur du tissu hélicoïdal, l'évolution du rapport r/c le long d'un rayon est indiquée, r étant la proportion relative de fils radiaux et c la proportion relative de fils circonférentiels. Dans une première zone, correspondant au moyeu de la jante, le rapport r/c est en moyenne égal à 30/70, les contraintes à ce niveau s'exerçant essentiellement en direction circonférentielle. Dans une deuxième zone, correspondant au reste de la jante à l'exception de la partie périphérique de celle-ci où sont ancrées les aubes, le rapport r/c est en moyenne égal à 50/50. Dans une troisième zone, correspondant à la partie d'ancrage des aubes dans la jante (pieds d'aubes), le rapport r/c est en moyenne égal à 70/30, les contraintes s'exerçant essentiellement en direction radiale. Enfin, dans une quatrième zone correspondant à l'aubage à l'extérieur de la jante, le rapport r/c évolue de la valeur 70/30 à une valeur 33/66 qui est naturellement obtenue avec des fils radiaux qui s'étendent tout le long des aubes, sans retour intermédiaire (d'où une décroissance progressive du taux de fils radiaux) et avec des fils circonférentiels régulièrement espacés (d'où un taux de fils circonférentiels sensiblement constant). Bien entendu, il n'y a pas de discontinuité brutale du rapport r/c au passage d'une zone à l'autre, la modification de ce rapport se faisant progressivement.

Les valeurs absolues du taux de fibres tᵣ en direction radiale et du taux de fibres t_{c} en direction circonférentielle sont choisies de manière à conférer au produit final la résistance mécanique nécessaire pour supporter les contraintes exercées. On choisira par exemple, au niveau du diamètre intérieur, un taux de fibres circonférentielles suffisant pour assurer la tenue de la roue aux efforts circonférentiels à ce niveau. Dans le reste de la roue, les valeurs des taux t_{c} et tᵣ sont choisies pour respecter l'évolution prédéterminée du rapport r/c. Il faut veiller à ce que le taux de fibres radiales ou circonférentielles soit suffisant dans des zones particulièrement exposées; ainsi, un taux de fibres radiales minimum doit être respecté en pied d'aube pour assurer l'ancrage des aubes. Par taux de fibres dans une zone, on entend ici le pourcentage de la surface de la zone occupée par les fibres.

Selon une autre caractéristique de l'invention, les fibres sont choisies de manière à présenter des propriétés adaptées aux conditions d'utilisation de la roue.

Lors de l'utilisation de la roue, notamment dans un turbo-réacteur, celle-ci est exposée, surtout dans sa partie périphérique, à des températures élevées et à des agressions chimiques. Par conséquent, les fibres radiales, qui peuvent s'étendre jusqu'au rayon extérieur, et les fibres circonférentielles dans la partie correspondant aux aubes sont choisies au moins en partie en un matériau d'abord apte à résister aux hautes températures et aux agressions chimiques, par exemple le carbure de silicium, malgré des propriétés mécaniques inférieures à celles des fils en carbone. Par contre, dans la jante, où les contraintes circonférentielles sont élevées, mais où les agressions thermiques et chimiques sont moins fortes, les fibres circonférentielles sont choisies au moins en partie en un matériau d'abord apte à assurer des contraintes mécaniques élevées, par exemple le carbone, malgré une moins bonne résistance aux températures élevées et aux agressions chimiques que le carbure de silicium. Ainsi, lors du tissage du tissu hélicoïdal, les fibres de chaîne sont par exemple en carbone, dans la partie correspondant à la jante, et en carbure de silicium dans la partie correspondant à l'aubage tandis que les fils de trame sont en carbure de silicium.

Lorsque la préforme de la roue a été réalisée par serrage des spires de tissu hélicoïdal, comme indiqué plus haut, cette préforme est maintenue en forme par imprégnation au moyen d'une résine fugitive pour pouvoir être usinée afin d'obtenir une ébauche. Celle-ci est ensuite mise dans un outillage pour être densifiée par le matériau constitutif de la matrice du matériau composite. La densification est de préférence réalisée par infiltration en phase vapeur du matériau de la matrice, par exemple du carbure de silicium. Le processus d'infiltration du carbure de silicium en phase vapeur est bien connu; il est décrit en particulier dans le document FR-A-2 401 888. L'élimination de la résine fugitive se produit lors de la montée en température précédant l'infiltration, l'ébauche étant maintenue par l'outillage. Lorsque la densification est terminée, la roue est usinée à ses dimensions définitives.

## Revendications

1. Roue de turbine grande vitesse comprenant une partie centrale, ou jante, munie d'aubes à sa périphérie et réalisée en une seule pièce en matériau composite constituée par un renfort fibreux densifié par une matrice, le renfort fibreux étant formé au moyen d'un tissu hélicoïdal (20) avec des fibres orientées radialement et des fibres orientées circonférentiellement,
caractérisée en ce que le rapport (r/c) entre le taux (r) de fibres orientées radialement et le taux (c) de fibres orientées circonférentiellement varie le long d'un rayon de la roue depuis une valeur inférieure à 1 au niveau du diamètre intérieur de la jante jusqu'à une valeur supérieure à 1 au niveau du diamètre extérieur de la jante, dans la zone d'ancrage des aubes, et décroît ensuite jusqu'à l'extrémité des aubes de sorte que la distribution des taux de fibres en direction radiale et en direction circonférentielle le long d'un rayon de la roue est fonction de la distribution des contraintes radiales et des contraintes circonférentielles, respectivement, qui s'exercent sur la roue au cours de son utilisation, et
en ce qu'au moins une partie des fibres en direction circonférentielle dans la jante sont en un matériau résistant aux contraintes mécaniques, tandis qu'au moins une partie des fibres en direction circonférentielle dans les aubes et des fibres en direction radiale sont en un matériau résistant aux températures élevées et aux agressions chimiques.

2. Roue selon la revendication 1, caractérisée en ce qu'au moins une partie des fibres en direction circonférentielle dans la jante sont en carbone.

3. Roue selon l'une quelconque des revendications 1 et 2, caractérisée en ce qu'au moins une partie des fibres en direction circonférentielle dans les aubes et en direction radiale sont en carbure de silicium.

4. Roue selon l'une quelconque des revendications 1 à 3, caractérisée en ce que la matrice est en carbure de silicium.

## Patentansprüche

1. Schnell laufendes Turbinenrad, bestehend aus einem zentralen Teil bzw. einer Felge, die aus einem Sstück aus Verbundmaterial hergestellt ist, das aus einer durch eine Matrix verdichtete Faserverstärkung besteht, die mittels eines spiralförmigen Gewebes (20) mit radial und in Umfangsrichtung orientierten Fasern hergestellt ist,
**dadurch gekennzeichnet, daß**
sich das Verhältnis (r/c) zwischen dem Anteil (r) von radial orientierten Fasern und dem Anteil c von in Umfangsrichtung orientierten Fasern längs eines Radius des Rades von einem Wert >1 in Höhe des Innendurchmessers der Felge bis zu einem Wert <1 in Höhe des Außendurchmessers der Felge im Bereich der Befestigung der Schaufeln ändert und dann bis zum Ende der Schaufeln derart abnimmt, daß die Verteilung der Anteile von radial und in Umfangsrichtung orientierten Fasern längs eines Radius des Rades eine Funktion der Verteilung der radialen bzw. der in Umfangsrichtung orientierten Beanspruchungen ist, die auf das Rad während seines Gebrauchs einwirken, und daß wenigstens ein Teil der in Umfangsrichtung orientierten Fasern in der Felge aus einem gegen die mechanischen Beanspruchungen widerstandsfähigen Material besteht, während wenigstens ein Teil der in Umfangsrichtung orientierten Fasern in den Schaufeln und der radial orientierten Fasern aus einem gegen hohe Temperaturen und chemische Einwirkungen widerstandsfähigen Material besteht.

2. Schnell laufendes Turbinenrad nach Anspruch 1,
**dadurch gekennzeichnet, daß**
wenigstens ein Teil der in Umfangsrichtung orientierten Fasern in der Felge aus Kohlenstoff besteht.

3. Schnell laufendes Turbinenrad nach Anspruch 1 und 2,
**dadurch gekennzeichnet, daß**
wenigstens ein Teil der in Umfangsrichtung orientierten Fasern in den Schaufeln und der radial orientierten Fasern aus Siliciumcarbid besteht.

4. Schnell laufendes Turbinenrad nach einem der Ansprüche 1 bis 3,
**dadurch gekennzeichnet, daß**
die Matrix aus Siliciumcarbid besteht.

## Claims

1. High-speed turbine wheel comprising a central portion, or rim, provided with blades at its peripheral portion and made of a single piece of composite material formed by a fibrous reinforcement densified by a matrix, said fibrous reinforcement being formed by means of a helical fabric (20) with radially oriented fibers and circumferentially oriented fibers, characterized in that the ratio (r/c) of the density (r) of radially oriented fibers and the density (c) of circumferentially oriented fibers varies along a radius of the wheel from a value which is smaller than 1 at the level of the inner diameter of the rim up to a value which is greater than 1 at the level of the outer diameter of the rim, in the anchoring zone of the blades, thereafter decreasing as far as the end of the blades such that the distribution of the densities of radially oriented fibers and circumferentially oriented fibers along a radius of the wheel varies as a function of the distribution of radial stresses and of circumferential stresses, respectively, exerted on the wheel when said wheel is in operation, and
in that at least part of said circumferentially oriented fibers in the rim are made of a material having substantial mechanical resistance, while at least part of said circumferentially oriented fibers in the blades and of said radially oriented fibers are made of a material having substantial resistance to high temperature and chemical attacks.

2. Wheel according to claim 1, characterized in that at least part of said circumferentially oriented fibers in the rim are made of carbon.

3. Wheel according to any one of claims 1 and 2, characterized in that at least part of said circumferentially oriented fibers in the blades and of said radially oriented fibers are made of silicon carbide.

4. Wheel according to any one of claims 1 to 3, characterized in that the matrix is made of silicon carbide.
